# FASCICULE DE BREVET EUROPEEN

(11) **EP 3 007 798 B1**
(45) Date de publication et mention de la délivrance du brevet: **02.08.2017**
(21) Numéro de dépôt: 14734892.4
(22) Date de dépôt: 12.06.2014
(51) Int. Cl.: B01D 46/00, B01D 46/10, B01D 46/52

(54) **PROCÉDÉ DE FABRICATION D'UN ÉLÉMENT FILTRANT**
VERFAHREN ZUR HERSTELLUNG EINES FILTERELEMENTS
METHOD FOR PRODUCING A FILTERING ELEMENT

(30) Priorité: 14.06.2013 FR 1355561
(43) Date de publication de la demande: 20.04.2016
(73) Titulaire: MECAPLAST France, 92140 Clamart (FR)
(72) Inventeur: BAZIN, Jean-Pierre, F-80800 Villers Bretonneux (FR); PINEAU, Philippe, F-59270 Bailleul (FR); JANDOS, Emmanuel, F-62410 Hulluch (FR)
(74) Mandataire: Delorme, Nicolas
(86) Numéro de dépôt international: PCT/FR2014/051445
(87) Numéro de publication internationale: WO 2014/199097

(56) Documents cités:
- EP-A1- 0 490 169

## Description

La présente invention concerne un procédé de fabrication d'un élément filtrant destiné à un filtre à air (moteur ou habitacle) pour véhicule automobile. L'invention concerne également un élément filtrant destiné à un filtre à air pour véhicule automobile pouvant être obtenu par ce procédé de fabrication.

Les éléments filtrants disponibles dans le commerce sont majoritairement en papier ou en matériau synthétique, plissé afin d'augmenter la surface filtrante mise en oeuvre. Ces éléments filtrants sont dotés d'un joint qui assure l'étanchéité entre l'élément filtrant et son réceptacle (par exemple une cuve fermée par un couvercle pour un filtre à air moteur) de sorte à garantir une séparation stricte entre un volume d'air non filtré communément appelé 'coté air sale' et un volume contenant l'air filtré communément appelé 'coté air propre'.

Le joint utilisé peut présenter différentes compositions, telles que du polyuréthane ou de la résine thermoplastique surmoulés sur l'élément filtrant. Des inconvénients relatifs à l'usage d'un joint polyuréthane résident en ce que sa fabrication nécessite la mise en oeuvre d'une réaction chimique avec des équipements spécifiques, tel qu'un dispositif de dosage des réactifs chimiques, des procédures de protection des opérateurs, des opérations manuelles de reprise des bavures formées lors du surmoulage.

De plus, le processus de production par surmoulage est lourd en investissement dans la mesure où il nécessite un moule de surmoulage pour chaque dimension de filtre. Le processus génère également une disparité de performance des éléments filtrants car lors du surmoulage, le polyuréthane ou la résine thermoplastique peut migrer à l'intérieur des plis du panneau filtrant et réduire ainsi la surface de filtration. En outre, il est très difficile de séparer un joint en polyuréthane ou en résine thermoplastique obtenu par surmoulage du panneau filtrant en matériau non tissé de sorte que le recyclage est quasimement impossible.

Selon une autre possibilité, le joint est formé par thermoformage du pourtour du panneau filtrant, sans ajout de matière ou de composant, ce qui nécessite un processus de production complexe. Cette méthode nécessite également de prévoir un moule de thermoformage pour chaque taille de filtre. De plus, la zone de joint thermoformée réduit la surface de filtration utile.

Le joint peut également être formé à partir d'un média non tissé collé ou soudé au panneau filtrant. Ce média non tissé peut par exemple être formé à partir d'une pièce pleine qui sera évidée pour former un cadre aux dimensions adaptées au panneau filtrant. Un inconvénient de cette méthode réside en ce qu'une perte importante de matière résulte de l'évidement, ce qui se répercute sur son coût de revient. Un autre inconvénient de cette méthode réside en ce que la mise en place de ce cadre prédécoupé à la périphérie des quatre cotés d'une des faces supérieure ou inférieur du panneau filtrant est difficile à réaliser dans le flux de production.

Le joint en média non tissé peut également être disposé sous forme de quatre bandelettes superposées à la périphérie des quatre cotés d'une des faces supérieure ou inférieur du panneau filtrant mais cette configuration nécessite de gérer le positionnement précis de chaque bandelette et de prévoir un robot ou un opérateur pour les mettre en place.

Le joint en média non tissé peut également être disposé sous forme de deux bandelettes disposées sur les extrémités latérales des plis du panneau filtrant, mais cette solution ne permet pas d'assurer simplement une continuité d'étanchéité sur tout le pourtour de l'élément filtrant.

Le document EP 0 490 169 A1 décrit un filtre plissé plat dont les rebords d'extrémités sont collés aux rebords longitudinaux.

La présente invention vise à pallier au moins l'un des inconvénients précités. A cet effet, l'invention propose un procédé de fabrication d'un élément filtrant destiné à un filtre à air pour véhicule automobile, le procédé comprenant les étapes consistant à :
a) Fournir un panneau filtrant présentant une nappe d'un média filtrant pliée en accordéon en une pluralité de plis parallèles s'étendant transversalement entre un premier rebord longitudinal plan et un second rebord longitudinal plan, les plans des premier et second rebords longitudinaux étant sensiblement parallèles, le panneau filtrant comprenant à ses extrémités longitudinales un premier pli d'extrémité et un second pli d'extrémité,
b) Relever et maintenir le premier pli d'extrémité et le second pli d'extrémité dans un plan sensiblement parallèle aux plans des premier et second rebords longitudinaux, et
c) Fixer une première bande de joint sur le premier rebord longitudinal, sur une première portion du premier pli d'extrémité et sur une première portion du second pli d'extrémité, et
d) Fixer une seconde bande de joint sur le second rebord longitudinal, sur une seconde portion du premier pli d'extrémité et sur une seconde portion du second pli d'extrémité.

Par 'média filtrant' on entend dans le présent document, une feuille d'un matériau adapté pour filtrer des particules de l'air dans le domaine automobile. Par l'expression 'panneau filtrant', on entend dans le présent document, le résultat de la conformation du média filtrant (formation des plis et soudure des plis entre eux) avant de former le joint assurant l'étanchéité du filtre.

Ainsi, ce procédé est adaptable à toutes les dimensions d'élément filtrant si bien qu'il n'est pas nécessaire d'investir dans des moules spécifiques pour chaque taille d'élément filtrant. Par ailleurs, ce procédé évite la manipulation d'un grand nombre de bandes de joint de sorte que la gestion du positionnement des bandes est facilitée et peut être réalisée dans le flux de production. De plus, ce procédé évite la formation de bavures diminuant la surface de filtration, optimise donc la capacité de filtration, évite l'intervention d'un opérateur et permet une grande répétabilité des étapes.

De préférence, les étapes c) et d) sont réalisées de manière concomitante. Il en résulte un temps de cycle réduit et un coût de revient très attractif.

Selon une possibilité, les étapes c) et d) sont réalisées successivement ou de façon décalée.

Avantageusement, la pluralité de plis parallèles est maintenue en place par un lien disposé au sommet des plis et l'étape b) comprend une étape consistant à éliminer localement le lien retenant en place le premier pli d'extrémité et le second pli d'extrémité Ainsi, le premier pli d'extrémité et le second pli d'extrémité libérés peuvent être relevés à l'horizontale, lorsque le plan formé par le sommet des plis repose à l'horizontale. Par le terme 'lien' on entend tout dispositif permettant de maintenir plan le panneau filtrant de sorte à éviter qu'il ne s'enroule sur lui-même. Le lien peut être par exemple formé par un cordon de colle, une cordelette de polyester ou une bande de matériau adapté.

Afin de favoriser le relevage et le maintien des premier et second plis d'extrémité parallèles aux plans des premier et second rebords longitudinaux selon l'étape b) du procédé et lors de la fixation des première et seconde bandes de joint selon les étape c) et d) du procédé, l'élément filtrant peut être placé dans une cuvette présentant une bordure sensiblement parallèle aux plans des premier et second rebords longitudinaux. Les plis d'extrémités reposant sur la bordure de la cuvette, y sont maintenus relevés.

Selon une alternative, l'étape b) est réalisée au moyen de doigts ou de plaques de relevage, actionnés par des vérins ou tout autre système mécanique ou électrique.

De préférence, le plan de chacun des plis d'extrémités relevés est coplanaire aux plans des premier et second rebords longitudinaux. Ainsi la fixation des première et seconde bandes de joint est facilitée.

Avantageusement, le premier rebord longitudinal et le second rebord longitudinal s'étendent chacun le long de l'élément filtrant suivant un axe, ledit axe du premier rebord longitudinal étant parallèle audit axe du second rebord longitudinal. Il est ainsi facile de positionner les bandes de joints parallèlement l'une à l'autre afin de finaliser l'élément filtrant. Cette étape est facilement réalisée dans le flux de production, ce qui permet de réduire les temps de cycle et le coût de revient.

De préférence, l'étape c) comprend une étape j) consistant à mettre en contact la première bande de joint avec le premier rebord, la première portion du premier pli d'extrémité et la première portion du second pli d'extrémité et en ce que l'étape d) comprend une étape jj) consistant à mettre en contact la seconde bande de joint avec le second rebord, la seconde portion du premier pli d'extrémité et la seconde portion du second pli d'extrémité.

Selon une disposition, l'étape c) comprend une étape consistant à appliquer un traitement thermique local jusqu'à atteindre la température de fusion du matériau de la première bande de joint, et en ce que l'étape d) comprend une étape consistant à appliquer un traitement thermique local jusqu'à atteindre la température de fusion du matériau de la seconde bande de joint. Cette alternative permet de limiter le nombre de composants nécessaires à la fabrication de l'élément filtrant et améliore le rendement de recyclage après usage.

Selon une possibilité, le traitement thermique est réalisé par air chaud pulsé, par ultra-son ou par rayonnement laser.

Selon une variante, l'étape c) comprend avant l'étape j) une étape i) consistant à déposer un premier cordon de colle sur le premier rebord, sur la première portion du premier pli d'extrémité et sur la première portion du second pli d'extrémité et l'étape d) comprend avant l'étape j) une étape ii) consistant à déposer un second cordon de colle sur le second rebord, sur la seconde portion du premier pli d'extrémité et sur la seconde portion du second pli d'extrémité. Cette étape est facilement réalisée sans nécessiter un équipement couteux et rend possible une production en continu.

De préférence, l'étape c) comprend une étape consistant à dérouler une portion d'un premier rouleau pour former la première bande de joint et en ce que l'étape d) comprend une étape consistant à dérouler une portion d'un second rouleau pour former la seconde bande de joint. Il est ainsi possible de disposer le joint du filtre par un procédé continu de sorte que les temps de cycle sont améliorés.

Selon une variante, le procédé comprend une étape consistant à prévoir des première et seconde bandes de joint d'une dimension correspondant sensiblement à la longueur du panneau filtrant. Il est entendu que cette longueur des bandes de joint correspond sensiblement à celle du panneau comportant les plis d'extrémités relevés. Bien entendu, les première et seconde bandes de joints sont prévues en amont de l'étape de fixation si bien que le temps de cycle n'est pas limité par cette variante de réalisation.

Selon une possibilité, le procédé comprend après l'étape d) une étape e) consistant à découper les premier et second plis d'extrémité de sorte à réduire la dimension longitudinale de l'élément filtrant. Ceci est avantageux lorsqu'il est nécessaire de fabriquer un élément filtrant compact pour être inséré dans un réceptacle de dimensions réduites, tout en limitant la perte de capacité de filtration de l'élément filtrant.

De préférence, le panneau filtrant, les première et seconde bandes de joint sont constituées d'un même matériau synthétique non tissé résilient. Ainsi, le nombre de matériaux constituant l'élément filtrant est réduit ce qui permet un recyclage efficace et réduit considérablement le coût de revient. De plus, les bandes de joint étant réalisées en matériau filtrant et agencées sur les plis d'extrémité également en matériau filtrant, la capacité de l'élément filtrant n'est pas diminuée par la présence du joint. Cette configuration apporte une nette amélioration de capacité de filtration par comparaison aux éléments filtrants de l'art antérieur. Le caractère résilient des bandes de joint évite d'appliquer une pression très importante sur le couvercle positionné sur la cuve du réceptacle pour pincer le joint et garantir une bonne étanchéité du filtre à air. Ceci contribue à réaliser des réceptacles plus simples en diminuant par exemple le nombre des éléments de bridage du couvercle et de la cuve.

De préférence, le matériau synthétique non tissé résilient comporte des fibres présentant une âme et une enveloppe dont la température de fusion est moins importante que celle de l'âme. Il est ainsi possible de fixer les bandes de joint par simple traitement thermique localisé. L'utilisation de colle est alors limitée, ce qui facilite le recyclage.

Selon un deuxième aspect, l'invention propose un élément filtrant destiné à un filtre à air pour véhicule automobile, l'élément filtrant comprenant :
- un panneau filtrant présentant une nappe d'un média filtrant pliée en accordéon en une pluralité de plis parallèles s'étendant transversalement entre un premier rebord longitudinal plan et un second rebord longitudinal plan, les plans des premier et second rebords longitudinaux étant sensiblement parallèles, l'élément filtrant comprenant à ses extrémités longitudinales un premier pli d'extrémité et un second pli d'extrémité, relevés et maintenus sensiblement parallèles aux plans des premier et second rebords longitudinaux,
- une première bande de joint fixée sur le premier rebord longitudinal, sur une première portion du premier pli d'extrémité et sur une première portion du second pli d'extrémité, et une seconde bande de joint sur le second rebord longitudinal, sur une seconde portion du premier pli d'extrémité et sur une seconde portion du second pli d'extrémité.

Cet élément filtrant présente avantageusement peu de pièces à assembler ce qui réduit les risques de mauvais positionnement, le nombre de déchets et le nombre d'étapes de fabrication.

De préférence, le panneau filtrant, la première bande de joint et la seconde bande de joint sont constitués du même matériau synthétique non tissé résilient comportant des fibres présentant une âme de polyester et une enveloppe de copolyester, la température de fusion de l'âme étant plus élevée que celle de l'enveloppe. Ainsi cet élément filtrant présente une capacité de filtration améliorée, il est simple à fabriquer ce qui contribue à diminuer son coût de revient. De plus, la composition de l'élément filtrant permet un recyclage total.

Par ailleurs, selon les capacités de filtration du média filtrant, l'élément filtrant de l'invention peut aussi être destiné à toute application utilisant des éléments filtrants dans des domaines d'application hors du domaine automobile.

D'autres aspects, buts et avantages de la présente invention apparaîtront mieux à la lecture de la description suivante d'un mode de réalisation de celle-ci, donnée à titre d'exemple non limitatif et faite en référence aux dessins annexés. Les figures ne respectent pas nécessairement l'échelle de tous les éléments représentés de sorte à améliorer leur lisibilité. Dans la suite de la description, par souci de simplification, des éléments identiques, similaires ou équivalents des différentes formes de réalisation portent les mêmes références numériques.
La figure 1 est une vue schématique illustrant un panneau filtrant pour la mise en oeuvre du procédé de fabrication d'un élément filtrant selon un mode de réalisation de l'invention.
La figure 2 est une vue schématique en perspective illustrant des plis d'extrémités relevés d'un panneau filtrant selon l'invention.
La figure 3 est une section en coupe des plis d'extrémités relevés du panneau filtrant illustré à la figure 2.
La figure 4 est une vue en perspective illustrant la fixation de bandes de joint sur un panneau filtrant.
La figure 5 est une vue en perspective illustrant une variante de fixation de bandes de joint sur un panneau filtrant.
La figure 6 est une vue en perspective d'une mise à taille des plis d'extrémité d'un élément filtrant selon un mode de réalisation de l'invention.

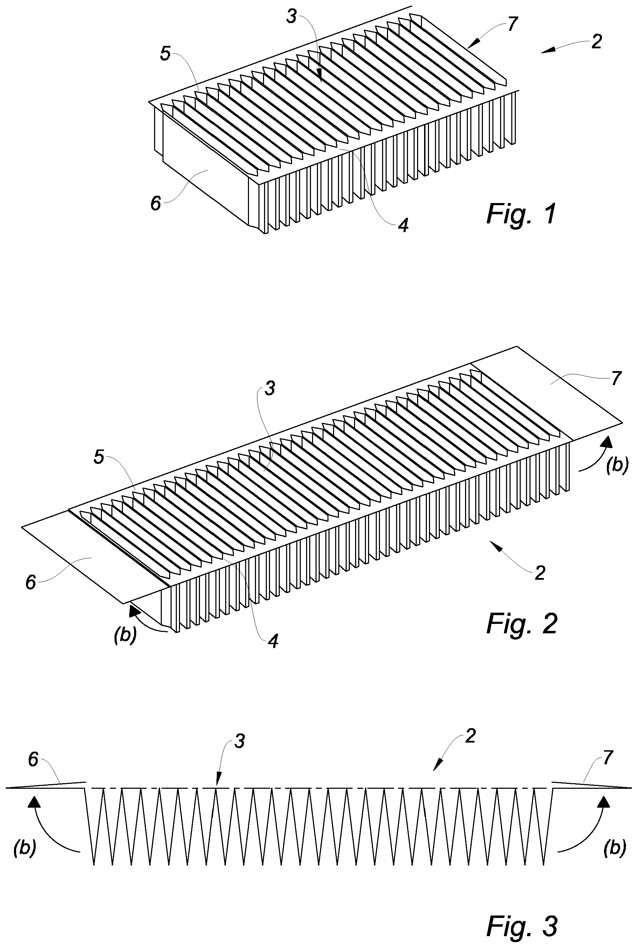

Les figures 1 à 6 illustrent le procédé de fabrication d'un élément filtrant 1. Comme illustré à la figure 1, le procédé comprend une première étape a) consistant à fournir un panneau filtrant 2 formé d'une nappe d'un média filtrant, tel qu'un matériau non tissé résilient en polyester. Ce matériau synthétique comprend notamment des fibres dont l'âme est en polyester et dont l'enveloppe est en copolyester, cette enveloppe ayant un point de fusion plus bas que celui de l'âme. Cette nappe est pliée en accordéon de sorte à présenter un ensemble de plis parallèles 3 s'étendant transversalement entre des premier et second rebords longitudinaux 4,5. Typiquement, cette nappe a été conformée au préalable par embossage, a été mise en forme par deux vis sans fin avec collage ou soudure (jonction) des extrémités longitudinales des plis 3 deux à deux de sorte à former les premier et second rebords longitudinaux 4,5. Puis la nappe est maintenue plane par le dépôt d'un lien longitudinal, tel un cordon de colle ou une cordelette au sommet des plis 3 (sur la face opposée du panneau filtrant 2 à celle exposée sur la figure 1). Le panneau filtrant 2 comprend à ses extrémités longitudinales un premier pli d'extrémité 6 et un second pli d'extrémité 7 qui sont relevés sensiblement à l'horizontale ou tout du moins qui sont parallèles au plan formé par les sommets des plis, selon l'étape b) du procédé (figures 2 et 3). Cette étape peut être notamment obtenue après avoir retiré localement le lien maintenant les plis d'extrémité 6,7 en accordéon contre les autres plis 3 de la nappe. Cette étape de retrait peut notamment être réalisée par un moyen tranchant, chauffé ou non au préalable, placé sur un doigt ou sur une plaque servant de relevage des plis d'extrémités 6,7. Selon une variante, la mise en place du panneau filtrant dans une cuvette, permet le relèvement des plis d'extrémité sensiblement à l'horizontal. Plus précisément, les plans des premier et second rebords longitudinaux 4,5 communément appelés 'pleat lock' disposés au sommet des plis parallèles 3, du coté opposé à la face du panneau filtrant 2 doté du lien longitudinal, sont parallèles aux plans des plis d'extrémités 6,7 relevés.

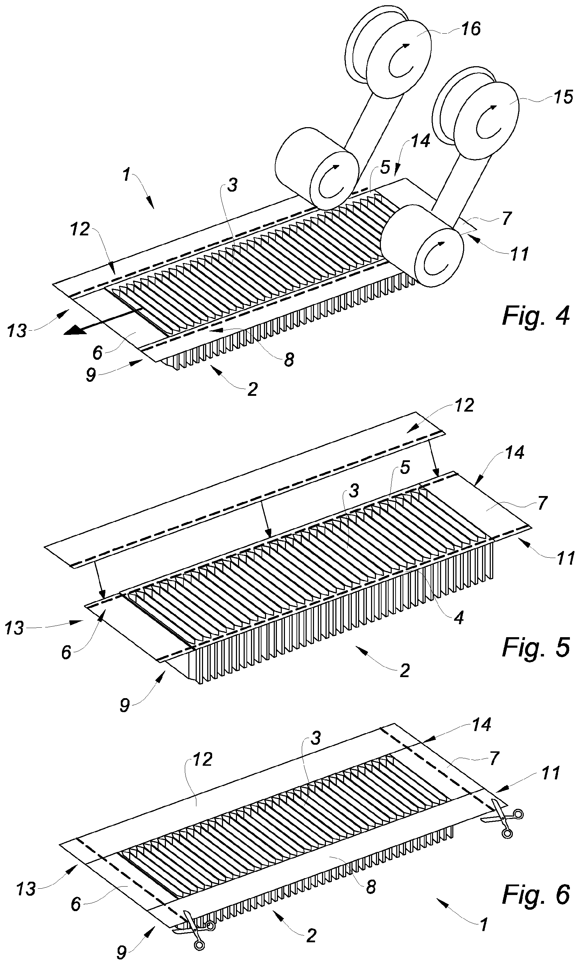

Comme illustré sur les figures 3, 4 et 5, les plans des plis d'extrémités 6,7 relevés et les plans des premiers et second rebords 4,5 sont coplanaires de sorte qu'il est facile de fixer une première bande de joint 8 sur le premier rebord 4, une première portion 9 du premier pli d'extrémité 6 et sur une première portion 11 du second pli d'extrémité 7 selon l'étape c) du procédé (figures 4 et 5).

De la même façon, une seconde bande de joint 12 est fixée sur le second rebord 5, une seconde portion 13 du premier pli d'extrémité 6 et sur une seconde portion 14 second pli d'extrémité 7 selon l'étape d) du procédé (figures 4 et 5).

Les première et seconde bandes de joint 8,12 sont constituées du même matériau non tissé résilient que celui du panneau filtrant 2 de sorte que le recyclage de l'élément filtrant 1 finalisé est facilité.

Selon le mode de réalisation illustré à la figure 4, les étapes c) et d) sont réalisées en même temps. Une portion d'un premier rouleau 15 est déroulée pour former la première bande de joint 8 et mise en contact avec le premier rebord 4 du panneau filtrant 2 (étape j). Dans le même temps, une portion d'un second rouleau 16 est déroulée longitudinalement sur le second rebord 5 opposé du panneau filtrant 2 de sorte à former la seconde bande de joint 12 (étape jj). Un traitement thermique local (non illustré) est appliqué jusqu'à atteindre le point de fusion de l'enveloppe des fibres du matériau constituant les bandes de joint 8,12 et le panneau filtrant 2. Les fibres partiellement fondues procurent au refroidissement une bonne adhésion entre les bandes de joint 8,12 et le panneau filtrant 2.

Lorsque le traitement thermique est appliqué par ultra-son ou par rayonnement laser, il est appliqué au fur et à mesure que des portions de bandes de joint 8,12 sont mises en contact avec le panneau filtrant 2. Ainsi, les matériaux sont en contact lorsque le traitement thermique est appliqué de sorte à créer une zone de fusion du matériau au niveau de la surface de contact entre les bandes de joint 8,12 et le panneau filtrant 2. Ce traitement thermique est ainsi réalisé en continu, au fur et à mesure que les matériaux sont mis en contact par déroulement des premier et second rouleaux 15,16.

Lorsque le traitement thermique est réalisé par air chaud pulsé, il est appliqué immédiatement avant la mise en contact de sorte à éviter un refroidissement qui gênerait l'obtention d'une bonne adhésion des matériaux entre eux et a lieu au fur et à mesure du déroulement de la bande de joint 8,12.

Selon une alternative illustrée à la figure 5, le procédé comprend une étape consistant à prévoir et fournir des première et seconde bandes de joint 8,12 d'une dimension correspondant à la longueur du panneau filtrant 2. Le traitement thermique est alors réalisé une fois des portions de première et seconde bandes de joint 8,12 en contact avec le panneau filtrant 2 dans le cas de l'utilisation d'ultra-son ou rayonnement infra rouge. Selon l'alternative où le traitement thermique est réalisé par air chaud pulsé, il est appliqué juste avant la mise en contact.

Selon encore une autre variante de réalisation (non illustrée), le procédé comprend la fourniture des première et seconde bandes de joint 8,12 d'une dimension correspondant à la longueur du panneau filtrant 2. En parallèle, un premier cordon de colle est déposé sur le premier rebord longitudinal 4, sur une première portion 9 du premier pli d'extrémité 6 et sur une première portion 11 du second pli d'extrémité 7 (non illustré). Dans le même temps ou de façon décalée, un second cordon de colle est déposé sur le second rebord longitudinal 5, sur une seconde portion 13 du premier pli d'extrémité 6 et sur une seconde portion 14 second pli d'extrémité 7. Puis la première bande de joint 8 et la seconde bande de joint 12 sont mises en contact avec le panneau filtrant 2 pour un collage sur les cordons de colle respectifs.

Comme illustré à la figure 6, selon une disposition particulière de l'invention, les premier et second plis d'extrémités 6,7 recouverts de leur bande de joint 8,12 respective sont découpés de sorte à former un élément filtrant 1 plus compact.

Ainsi, le procédé selon l'invention permet de minimiser le nombre des composants nécessaires à la fabrication de l'élément filtrant 1. De plus, ces composants sont standards à toutes les dimensions de panneau filtrant 2, les opérations de fabrication sont réalisables en flux et ne nécessitent que des équipements de production standard. L'élément filtrant 1 obtenu est principalement composé de matériau synthétique non tissé et présente une capacité de filtration améliorée, il est facilement recyclable. Son coût de revient en est nettement réduit.

Il va de soi que l'invention n'est pas limitée au mode de réalisation décrit ci-dessus à titre d'exemple mais qu'elle comprend tous les équivalents techniques et les variantes des moyens décrits ainsi que leurs combinaisons.

## Revendications

1. Procédé de fabrication d'un élément filtrant (1) destiné à un filtre à air pour véhicule automobile, le procédé comprenant les étapes consistant à :
a) Fournir un panneau filtrant (2) présentant une nappe d'un média filtrant pliée en accordéon en une pluralité de plis parallèles (3) s'étendant transversalement entre un premier rebord longitudinal (4) plan et un second rebord longitudinal (5) plan, les plans des premier et second rebords longitudinaux (4,5) étant sensiblement parallèles, le panneau filtrant (2) comprenant à ses extrémités longitudinales un premier pli d'extrémité (6) et un second pli d'extrémité (7),
b) Relever et maintenir le premier pli d'extrémité (6) et le second pli d'extrémité (7) dans un plan sensiblement parallèle aux plans des premier et second rebords longitudinaux (4,5), et
c) Fixer une première bande de joint (8) sur le premier rebord longitudinal (4), sur une première portion (9) du premier pli d'extrémité (6) et sur une première portion (11) du second pli d'extrémité (7), et
d) Fixer une seconde bande de joint (12) sur le second rebord longitudinal (5), sur une seconde portion (13) du premier pli d'extrémité (6) et sur une seconde portion (14) du second pli d'extrémité (7).

2. Procédé selon la revendication 1, **caractérisé en ce que** les étapes c) et d) sont réalisées de manière concomitante.

3. Procédé selon l'une des revendications 1 à 2, **caractérisé en ce que** la pluralité de plis parallèles (3) est maintenue en place par un lien disposé au sommet des plis (3) et **en ce que** l'étape b) comprend une étape consistant à éliminer localement le lien retenant en place le premier pli d'extrémité (6) et le second pli d'extrémité (7).

4. Procédé selon l'une des revendications 1 à 3, **caractérisé en ce que** le premier rebord longitudinal (4) et le second rebord longitudinal (5) s'étendent chacun le long du panneau filtrant (2) suivant un axe, ledit axe du premier rebord longitudinal (4) étant parallèle audit axe du second rebord longitudinal (5).

5. Procédé selon l'une des revendications 1 à 4, **caractérisé en ce que** l'étape c) comprend une étape j) consistant à mettre en contact la première bande de joint (8) avec le premier rebord longitudinal (4), la première portion (9) du premier pli d'extrémité (6) et la première portion (11) du second pli d'extrémité (7) et **en ce que** l'étape d) comprend une étape jj) consistant à mettre en contact la seconde bande de joint (12) avec le second rebord longitudinal (5), la seconde portion (13) du premier pli d'extrémité (6) et la seconde portion (14) du second pli d'extrémité (7).

6. Procédé selon l'une des revendications 1 à 5, **caractérisé en ce que** l'étape c) comprend une étape consistant à appliquer un traitement thermique local jusqu'à atteindre la température de fusion du matériau de la première bande de joint (8), et **en ce que** l'étape d) comprend une étape consistant à appliquer un traitement thermique local jusqu'à atteindre la température de fusion du matériau de la seconde bande de joint (12).

7. Procédé selon la revendication 6, **caractérisé en ce que** le traitement thermique est réalisé par air chaud pulsé, par ultra-son ou par rayonnement laser.

8. Procédé selon la revendication 5, **caractérisé en ce que** l'étape c) comprend avant l'étape j) une étape i) consistant à déposer un premier cordon de colle sur le premier rebord longitudinal (4), sur la première portion (9) du premier pli d'extrémité (6) et sur la première portion (11) du second pli d'extrémité (7) et **en ce que** l'étape d) comprend avant l'étape j) une étape ii) consistant à déposer un second cordon de colle sur le second rebord longitudinal (5), sur la seconde portion (13) du premier pli d'extrémité (6) et sur la seconde portion (14) du second pli d'extrémité (7).

9. Procédé selon l'une des revendications 1 à 8, **caractérisé en ce que** l'étape c) comprend une étape consistant à dérouler une portion d'un premier rouleau (15) pour former la première bande de joint (8) et **en ce que** l'étape d) comprend une étape consistant à dérouler une portion d'un second rouleau (16) pour former la seconde bande de joint (12).

10. Procédé selon l'une des revendications 1 à 9, **caractérisé en ce que** le procédé comprend une étape consistant à prévoir des première et seconde bandes de joint (8,12) d'une dimension correspondant sensiblement à la longueur de l'élément filtrant (1).

11. Procédé selon l'une des revendications 1 à 10, **caractérisé en ce que** le procédé comprend après l'étape d) une étape e) consistant à découper les premier et second plis d'extrémité (6,7) de sorte à réduire la dimension longitudinale de l'élément filtrant (1).

12. Procédé selon l'une des revendications 1 à 11, **caractérisé en ce que** le panneau filtrant (2), les première et seconde bandes de joint (8,12) sont constituées d'un même matériau synthétique non tissé résilient.

13. Procédé selon la revendication 12, **caractérisé en ce que** le matériau synthétique non tissé résilient comporte des fibres présentant une âme et une enveloppe dont la température de fusion est moins importante que celle de l'âme.

14. Élément filtrant (1) destiné à un filtre à air pour véhicule automobile, l'élément filtrant (1) comprenant :
- un panneau filtrant (2) présentant une nappe d'un média filtrant pliée en accordéon en une pluralité de plis parallèles (3) s'étendant transversalement entre un premier rebord longitudinal (4) plan et un second rebord longitudinal (5) plan, les plans des premier et second rebords longitudinaux (4,5) étant sensiblement parallèles, le panneau filtrant (2) comprenant à ses extrémités longitudinales un premier pli d'extrémité (6) et un second pli d'extrémité (7), relevés et maintenus sensiblement parallèles aux plans des premier et second rebords longitudinaux (4,5),
- une première bande de joint (8) fixée sur le premier rebord longitudinal (4), sur une première portion (9) du premier pli d'extrémité (6) et sur une première portion (11) du second pli d'extrémité 7, et
- une seconde bande de joint (12) sur le second rebord longitudinal (5), sur une seconde portion (13) du premier pli d'extrémité (6) et sur une seconde portion (14) du second pli d'extrémité (7).

15. Élément filtrant (1) selon la revendication 14, **caractérisé en ce que** le panneau filtrant (2), la première bande de joint (8) et la seconde bande de joint (12) sont constitués du même matériau synthétique non tissé résilient comportant des fibres présentant une âme de polyester et une enveloppe de copolyester, la température de fusion de l'âme étant plus élevée que celle de l'enveloppe.

## Patentansprüche

1. Verfahren zur Herstellung eines Filterelements (1), das für einen Luftfilter für ein Kraftfahrzeug bestimmt ist, wobei das Verfahren die folgenden Schritte umfasst:
a) Bereitstellen einer Filterplatte (2), die eine Einlage mit einem Filtermedium aufweist, das in eine Vielzahl von parallelen Falten (3) in Zick-Zack-Form gefaltet ist, die sich quer zwischen einem ersten ebenen Längsrand (4) und einem zweiten ebenen Längsrand (5) erstrecken, wobei die Ebenen des ersten und zweiten Längsrandes (4, 5) in etwa parallel sind, wobei die Filterplatte (2) an ihren Längsenden eine erste Abschlussfalte (6) und eine zweite Abschlussfalte (7) aufweist,
b) Hochklappen und Festhalten der ersten Abschlussfalte (6) und der zweiten Abschlussfalte (7) auf einer Ebene in etwa parallel zu den Ebenen des ersten und zweiten Längsrandes (4, 5), und
c) Befestigen eines ersten Dichtstreifens (8) auf dem ersten Längsrand (4), auf einem ersten Abschnitt (9) der ersten Abschlussfalte (6) und auf einem ersten Abschnitt (11) der zweiten Abschlussfalte (7), und
d) Befestigen eines zweiten Dichtstreifens (12) auf dem zweiten Längsrand (5), auf einem zweiten Abschnitt (13) der ersten Abschlussfalte (6) und auf einem zweiten Abschnitt (14) der zweiten Abschlussfalte (7).

2. Verfahren nach Anspruch 1, **dadurch gekennzeichnet, dass** die Schritte c) und d) gleichzeitig durchgeführt werden.

3. Verfahren nach einem der Ansprüche 1 bis 2, **dadurch gekennzeichnet, dass** die Vielzahl von parallelen Falten (3) durch eine Verbindung an Ort und Stelle gehalten wird, die am Scheitelpunkt der Falten (3) angeordnet ist, und dadurch, dass der Schritt b) einen Schritt umfasst, der darin besteht, die Verbindung, die die erste Abschlussfalte (6) und die zweite Abschlussfalte (7) an Ort und Stelle hält, stellenweise zu eliminieren.

4. Verfahren nach einem der Ansprüche 1 bis 3, **dadurch gekennzeichnet, dass** sich der erste Längsrand (4) und der zweite Längsrand (5) jeweils in Längsrichtung der Filterplatte (2) entlang einer Achse erstrecken, wobei die besagte Achse des ersten Längsrandes (4) parallel zur besagten Achse des zweiten Längsrandes (5) verläuft.

5. Verfahren nach einem der Ansprüche 1 bis 4, **dadurch gekennzeichnet, dass** der Schritt c) einen Schritt j) umfasst, der darin besteht, den ersten Dichtstreifen (8) mit dem ersten Längsrand (4), dem ersten Abschnitt (9) der ersten Abschlussfalte (6) und dem ersten Abschnitt (11) der zweiten Abschlussfalte (7) in Kontakt zu bringen, und dadurch, dass der Schritt d) einen Schritt jj) umfasst, der darin besteht, den zweiten Dichtstreifen (12) mit dem zweiten Längsrand (5), dem zweiten Abschnitt (13) der ersten Abschlussfalte (6) und dem zweiten Abschnitt (14) der zweiten Abschlussfalte (7) in Kontakt zu bringen.

6. Verfahren nach einem der Ansprüche 1 bis 5, **dadurch gekennzeichnet, dass** der Schritt c) einen Schritt umfasst, der darin besteht, eine lokale Wärmebehandlung anzuwenden, bis die Schmelztemperatur des Materials des ersten Dichtstreifens (8) erreicht wird, und dadurch, dass der Schritt d) einen Schritt umfasst, der darin besteht, eine lokale Wärmebehandlung anzuwenden, bis die Schmelztemperatur des Materials des zweiten Dichtstreifens (12) erreicht wird.

7. Verfahren nach Anspruch 6, **dadurch gekennzeichnet, dass** die Wärmebehandlung durch warme Umluft, durch Ultraschall oder durch Laserstrahlung erfolgt.

8. Verfahren nach Anspruch 5, **dadurch gekennzeichnet, dass** der Schritt c) vor dem Schritt j) einen Schritt i) umfasst, der darin besteht, eine erste Klebstoffraupe am ersten Längsrand (4), am ersten Abschnitt (9) der ersten Abschlussfalte (6) und am ersten Abschnitt (11) der zweiten Abschlussfalte (7) aufzubringen, und dadurch dass der Schritt d) vor dem Schritt j) einen Schritt ii) umfasst, der darin besteht, eine zweite Klebstoffraupe am zweiten Längsrand (5), am zweiten Abschnitt (13) der ersten Abschlussfalte (6) und am zweiten Abschnitt (14) der zweiten Abschlussfalte (7) aufzubringen.

9. Verfahren nach einem der Ansprüche 1 bis 8, **dadurch gekennzeichnet, dass** der Schritt c) einen Schritt umfasst, der darin besteht, einen Abschnitt einer ersten Rolle (15) abzurollen, um den ersten Dichtstreifen (8) zu bilden und dadurch, dass der Schritt d) einen Schritt umfasst, der darin besteht, einen Abschnitt einer zweiten Rolle (16) abzurollen, um den zweiten Dichtstreifen (12) zu bilden.

10. Verfahren nach einem der Ansprüche 1 bis 9, **dadurch gekennzeichnet, dass** das Verfahren einen Schritt umfasst, der darin besteht, einen ersten und zweiten Dichtstreifen (8, 12) mit einer Abmessung vorzusehen, die in etwa der Länge des Filterelements (1) entspricht.

11. Verfahren nach einem der Ansprüche 1 bis 10, **dadurch gekennzeichnet, dass** das Verfahren nach dem Schritt d) einen Schritt e) umfasst, der darin besteht, die erste und zweite Abschlussfalte (6, 7) abzuschneiden, sodass sich die Längsabmessung des Filterelements (1) verringert.

12. Verfahren nach einem der Ansprüche 1 bis 11, **dadurch gekennzeichnet, dass** die Filterplatte (2), der erste und zweite Dichtstreifen (8, 12) aus einem selben robusten Kunststoff-Vliesmaterial gebildet werden.

13. Verfahren nach Anspruch 12, **dadurch gekennzeichnet, dass** das robuste Kunststoff-Vliesmaterial Fasern umfasst, die einen Kern und eine Hülle aufweisen, deren Schmelztemperatur geringer ist, als jene des Kerns.

14. Filterelement (1), das für einen Luftfilter für ein Kraftfahrzeug bestimmt ist, wobei das Filterelement (1) umfasst:
- eine Filterplatte (2), die eine Einlage mit einem Filtermedium aufweist, das in eine Vielzahl von parallelen Falten (3) in Zick-Zack-Form gefaltet ist, die sich quer zwischen einem ersten ebenen Längsrand (4) und einem zweiten ebenen Längsrand (5) erstrecken, wobei die Ebenen des ersten und zweiten Längsrandes (4, 5) in etwa parallel sind, wobei die Filterplatte (2) an ihren Längsenden eine erste Abschlussfalte (6) und eine zweite Abschlussfalte (7) aufweist, die hochgeklappt und in etwa parallel zu den Ebenen des ersten und zweiten Längsrandes (4, 5) gehalten werden,
- einen ersten Dichtstreifen (8), der auf dem ersten Längsrand (4), auf einem ersten Abschnitt (9) der ersten Abschlussfalte (6) und auf einem ersten Abschnitt (11) der der zweiten Abschlussfalte (7) befestigt ist, und
- einen zweiten Dichtstreifen (12) auf dem zweiten Längsrand (5), einem zweiten Abschnitt (13) der ersten Abschlussfalte (6) und auf einem zweiten Abschnitt (14) der zweiten Abschlussfalte (7).

15. Filterelement (1) nach Anspruch 14, **dadurch gekennzeichnet, dass** die Filterplatte (2), der erste Dichtstreifen (8) und der zweite Dichtstreifen (12) aus demselben robusten Kunststoff-Vliesmaterial gebildet werden, der Fasern umfasst, die einen Kern und eine Hülle aus Co-Polyester aufweisen, wobei die Schmelztemperatur des Kerns höher ist, als jene der Hülle.

## Claims

1. A method for manufacturing a filter member (1) for an air filter of a motor vehicle, the method comprising the steps consisting in:
a) Providing a filter panel (2) having a sheet of a filter medium which has an accordion-folded shape into a plurality of parallel folds (3) extending transversely between a first planar longitudinal flange (4) and a second planar longitudinal flange (5), the planes of the first and second longitudinal flanges (4, 5) being substantially parallel, the filter panel (2) comprising at the longitudinal ends thereof a first end fold (6) and a second end fold (7),
b) Raising and holding the first end fold (6) and the second end fold (7) in a plane substantially parallel to the planes of the first and second longitudinal flanges (4,5), and
c) Fastening a first joint strip (8) on the first longitudinal flange (4), on a first portion (9) of the first end fold (6) and on a first portion (11) of the second end fold (7), and
d) Fastening a second joint strip (12) on the second longitudinal flange (5), on a second portion (13) of the first end fold (6) and on a second portion (14) of the second end fold (7).

2. The method according to claim 1, **characterized in that** the steps c) and d) are carried out concomitantly.

3. The method according to any of claims 1 to 2, **characterized in that** the plurality of parallel folds (3) is held in place by a link disposed at the top of the folds (3) and **in that** step b) comprises a step consisting in locally removing the link retaining in place the first end fold (6) and the second end fold (7).

4. The method according to any of claims 1 to 3, **characterized in that** the first longitudinal flange (4) and the second longitudinal flange (5) each extend along the filter panel (2) along an axis, said axis of the first longitudinal flange (4) being parallel to said axis of the second longitudinal flange (5).

5. The method according to any of claims 1 to 4, **characterized in that** step c) comprises a step j) consisting in bringing the first joint strip (8) into contact with the first longitudinal flange (4), the first portion (9) of the first end fold (6) and the first portion (11) of the second end fold (7), and **in that** step d) comprises a step jj) consisting in bringing the second joint strip (12) into contact with the second longitudinal flange (5), the second portion (13) of the first end fold (6) and the second portion (14) of the second end fold (7).

6. The method according to any of claims 1 to 5, **characterized in that** step c) comprises a step consisting in applying a local heat treatment until reaching the melting temperature of the material of the first joint strip (8), and **in that** step d) comprises a step consisting in applying a local heat treatment until reaching the melting temperature of the material of the second joint strip (12).

7. The method according to claim 6, **characterized in that** the heat treatment is carried out by forced hot air, by ultrasound or by laser radiation.

8. The method according to claim 5, **characterized in that** step c) comprises, before step j), a step i) consisting in depositing a first adhesive bead on the first longitudinal flange (4), on the first portion (9) of the first end fold (6) and on the first portion (11) of the second end fold (7) and **in that** step d) comprises before step j) a step ii) consisting in depositing a second adhesive bead on the second longitudinal flange (5), on the second portion (13) of the first end fold (6) and on the second portion (14) of the second end fold (7).

9. The method according to any of claims 1 to 8, **characterized in that** step c) comprises a step consisting in unwinding a portion of a first roller (15) in order to form the first joint strip (8) and **in that** step d) comprises a step consisting in unwinding a portion of a second roller (16) in order to form the second joint strip (12).

10. The method according to any of claim 1 to 9, **characterized in that** the method comprises a step consisting in providing for first and second joint strips (8, 12) of a dimension substantially corresponding to the length of the filter member (1).

11. The method according to any of claims 1 to 10, **characterized in that** the method comprises, after step d), a step e) consisting in cutting the first and second end folds (6, 7) so as to reduce the longitudinal dimension of the filter member (1).

12. The method according to any of claims 1 to 11, **characterized in that** the filter panel (2), the first and second joint strips (8, 12) are made of the same resilient non-woven synthetic material.

13. The method according to claims 12, **characterized in that** the resilient nonwoven synthetic material includes fibers having a core and an envelope whose melting temperature is lower than that of the core.

14. A filter member (1) for an air filter of a motor vehicle, the filter member (1) comprising:
- a filter panel (2) having a sheet of a filter medium which has an accordion-folded shape into a plurality of parallel folds (3) extending transversely between a first planar longitudinal flange (4) and a second planar longitudinal flange (5), the planes of the first and second longitudinal flanges (4, 5) being substantially parallel, the filter panel (2) comprising at the longitudinal ends thereof a first end fold (6) and a second end fold (7), raised and held substantially parallel to the planes of the first and second longitudinal flanges (4, 5),
- a first joint strip (8) fastened on the first longitudinal flange (4), on a first portion (9) of the first end fold (6) and on a first portion (11) of the second end fold (7), and
- a second joint strip (12) fastened on the second longitudinal flange (5), on a second portion (13) of the first end fold (6) and on a second portion (14) of the second end fold (7).

15. The filter member according to claim 14, **characterized in that** the filter panel (2), the first joint strip (8) and the second joint strip (12) are made of the same resilient nonwoven synthetic material including fibers having a polyester core and a copolyester envelope, the melting temperature of the core being higher than that of the envelope.
